# EUROPÄISCHE PATENTSCHRIFT

(11) **EP 1 609 032 B1**
(45) Veröffentlichungstag und Bekanntmachung des Hinweises auf die Patenterteilung: **16.08.2006**
(21) Anmeldenummer: 03747820.3
(22) Anmeldetag: 25.08.2003
(51) Int. Cl.: G05B 19/12, F02D 41/24, F02M 61/16

(54) **KRAFTSTOFFEINSPRITZVENTIL UND BRENNKRAFTMASCHINENANLAGE**
FUEL INJECTION VALVE AND INTERNAL COMBUSTION ENGINE
SOUPAPE D'INJECTION DE CARBURANT ET SYSTEME A COMBUSTION INTERNE

(30) Priorität: 22.03.2003 DE 10312914
(43) Veröffentlichungstag der Anmeldung: 28.12.2005
(73) Patentinhaber: ROBERT BOSCH GMBH, 70442 Stuttgart (DE)
(72) Erfinder: KOEHLER, Daniel, 71701 Schwieberdingen (DE)
(86) Internationale Anmeldenummer: PCT/DE2003/002827
(87) Internationale Veröffentlichungsnummer: WO 2004/086158

(56) Entgegenhaltungen:
- WO-A-01/53900
- WO-A-03/081353
- DE-A- 10 117 809
- US-A- 4 742 470
- US-A- 4 942 534
- US-B1- 6 516 658

## Beschreibung

### Stand der Technik

Die Erfindung geht aus von einem Kraftstoffeinspritzventil gemäß dem Oberbegriff des Patentanspruchs 1. Bei einem derartigen Kraftstoffeinspritzventil kann es sich insbesondere um einen Injektor handeln, dem von einem Druckspeicher Kraftstoff unter hohem Druck (z. B. 1600 bar) zugeführt wird, wobei der Injektor zum Erzeugen der Einspritzung in den Brennraum eines Verbrennungsmotors Einspritzdüsen des Kraftstoffeinspritzventils freigibt oder sperrt. Das Kraftstoffeinspritzventil kann z. B. auch eine so genannte Pumpe-Düse-Einheit sein, der Kraftstoff unter einem für das Einspritzen nicht ausreichenden Druck zugeführt wird, und die Pumpe-Düse-Einheit erzeugt den zum Einspritzen erforderlichen hohen Druck und führt den Einspritzvorgang aus. Bekannte derartige Kraftstoffeinspritzventile tragen auf Beschriftungsfeldern eine Vielzahl von Angaben in Klarschrift, also für das menschliche Auge lesbar. Zu den Angaben mögen Typenbezeichnung, Verwendungsangaben, Herstellungszeit gehören. Es ist auch bekannt, digitale Daten in Form einer Rechteckmatrix aus schwarzen und weißen Feldern zu speichern, wobei diese Rechteckmatrix vom menschlichen Auge wahrnehmbar ist, die Daten sinnvoll aber nur maschinell ausgewertet werden können, im Beispiel durch Aufnahme mittels einer Kamera, insbesondere Videokamera oder andere elektronische Kamera, deren aufgenommenes Bild elektronisch ausgewertet wird. Die Fläche für diese digitalen Daten und auch für die in Klarschrift dargestellten Daten ist beschränkt, und die Lesbarkeit der genannten Daten kann dadurch eingeschränkt sein, dass sich Anspritzpunkte, an denen beim Umspritzen Kunststoff zugeführt wird, als Ungleichmäßigkeit in der Oberfläche der Kunststoffumspritzung bemerkbar machen, wodurch die Lesbarkeit eingeschränkt werden kann oder der Flächenbereich für zu lesende Angaben reduziert wird. Die Lesbarkeit ist außerdem durch Verschmutzung und durch etwaige vor dem Ablesen erst abzunehmende Teile, wie beispielsweise angesteckte Kraftstoffleitungen oder elektrische Leitungen, oder den freien Blick auf die Daten störende Befestigungsmittel, wie Klemmbügel, eingeschränkt.

Kraftstoffeinspritzventile nach dem Oberbegriff des Anspruchs 1 sind aus den Druckschriften WO 03/081353A (Veroffentlicheings datum 02.10.2003) und DE 101 17 8091 bekannt.

### Vorteile der Erfindung

Der Vorteil des erfindungsgemäßen Kraftstoffeinspritzventils gemäß Anspruch 1 besteht darin, dass deswegen, weil der Transponder mit einem elektronischen Speicher sehr großer Kapazität ausgerüstet werden kann, viele Daten elektronisch gespeichert werden können. Es ist daher der oben genannten bekannte Matrixspeicher nicht mehr erforderlich, so dass dessen Platz für Beschriftungen zur Verfügung steht. Es können daher auch Ablesefehler beim Lesen des digitalen Matrixspeichers mittels Kamera beispielsweise infolge einer Schiefstellung der Kamera nicht auftreten. Im Transponder können die gespeicherten Daten alle Eigenschaften und technischen Parameter des Injektors beinhalten. Hierzu gehören insbesondere Messwerte, die für dieses spezielle Kraftstoffeinspritzventil im Laufe der Herstellung oder nach einer Reparatur gemessen wurden. Im letztgenannten Fall können Daten im Transponder, die nicht mehr benötigt werden, durch ein Schreibgerät für den Transponder gelöscht werden und mit aktuellen Werten überschrieben werden. Bei den im Werk gespeicherten Daten können je nach Organisationen der Fertigung auch die bei der Herstellung der einzelnen Teile des Injektors (zur Vereinfachung wird nachfolgend das Kraftstoffeinspritzventil häufig als Injektor bezeichnet, auch wenn, wie oben erwähnt, technisch andere Einspritzvorrichtungen unter die Erfindung fallen) interessierenden Daten, z. B. mechanische Abmessungen, Nummer der Bearbeitungsstation, Herstellungsdatum oder Chargen-Nummer im Transponder gespeichert werden. Dies kann das Aufspüren der Ursachen von Fehlern erleichtern. Da der Transponder die Gestalt des Injektorkopfes nicht verändert und im Inneren des Injektorkopfes untergebracht ist, ist irgend eine Änderung von Werkstückträgern, die den Injektor oder den Injektorkopf in verschiedenen Stationen der Montagelinie halten, nicht erforderlich. Der Teile der Beschriftungen in Klarschrift, der weithin sichtbar sein sollen, können besser positioniert werden. Verschmutzungen haben für das Lesen und Speichern der Daten des Transponders keine Bedeutung.

Zur Energieversorgung des Transponders wird dieser bei Ausführungsformen der Erfindung durch eine Batterie gespeist; bevorzugt weist dieser aber eine Induktionsspule auf, die beim Lesen und Schreiben mittels eines Lese- bzw. Schreibgeräts (oder einer Lese- bzw. Schreibeinrichtung) von diesem ausgesandte Funkwellen oder auch ein elektromagnetisches Niederfrequenzfeld auffängt und daraus elektrische Energie zum Betreiben des Transponders und der Sende- und Empfangseinrichtung gewinnt. Zum Aussenden der im Transponder gelesenen Daten kann ebenfalls die genannte Spule dienen.

Die Erfindung betrifft auch eine Brennkraftmaschinenanlage nach dem Oberbegriff des Anspruchs 2. Die Erfindung gemäß kennzeichnenden Teil des Anspruchs 2 weist den Vorteil auf, dass das Steuergerät Daten, die im Injektor (in dessen Transponder) gespeichert sind, für die Steuerung auswerten kann. Hierdurch ist beispielsweise eine automatische Feinanpassung der Steuerung an Werte des Injektors möglich, die zwar innerhalb eines zulässigen Schwankungsbereichs liegen, aber dennoch zwecks optimaler Steuerung des Motors eine individuelle berücksichtigt werden sollten.

Für Wartungszwecke in der Werkstatt kann es genügen, den Inhalt des Transponderspeichers mit einem Lesegerät, möglicherweise auch einem Lese- und Schreibgerät, dass manuell zu betätigen ist, auszulesen bzw. den Transponder mit weiteren Werten zu beschreiben. Der Vorteil der Ausführungsform nach Anspruch 3 besteht darin, dass das genannte Gerät ortsfest eingebaut ist und daher ständig, auch während der Fahrt oder allgemeiner des Betriebs des Motors, zur Verfügung stehen kann. Sowohl das genannte von Hand zu betätigende Lesegerät als auch das ortsfeste Lesegerät können so ausgebildet sein, dass sie alle Injektoren der Brennkraftmaschinenanlage nahezu gleichzeitig oder auf einen vom Benutzer oder von der Steuereinrichtung ausgelösten Befehl hin auszulesen gestatten.

Bei der Ausführungsform nach Anspruch 6 ist von Vorteil, dass in dem Injektor bzw. in jedem der Injektoren Daten gespeichert werden, die z. B. für folgende Zwecke verwendbar sind: Hinweise auf erforderliche Wartungsarbeiten bei der nächsten Untersuchung des Fahrzeugs; Hinweise auf Fahrbedingungen, die möglicherweise zu einem Ausfall des Injektors beigetragen haben.

Weitere Vorteile und vorteilhafte Ausgestaltungen des Gegenstands der Erfindung sind der Beschreibung, der Zeichnung und den Ansprüchen entnehmbar.

### Zeichnung

Ein Ausführungsbeispiel eines erfindungsgemäßen Kraftstoffeinspritzventils, nämlich eines Injektors für Dieseltreibstoff, und Ausführungsbeispiele von zwei erfindungsgemäßen Brennkraftmaschinenanlagen sind in der nachfolgenden Beschreibung näher erläutert. Es zeigen:
- Fig. 1: einen Injektor mit einem eingespritzten Transponder in einem vereinfachten Querschnitt durch den Injektorkopf, und ein mit dem Transponder zusammenwirkendes manuell zu betätigendes Lese- und Schreibgerät;
- Fig. 2: einen vereinfachten Längsschnitt durch den Transponderkopf der Fig. 1, wobei weitere Teile des Injektors stark vereinfacht und abgebrochen gezeigt sind; und
- Fig. 3: Brennkraftmaschinenanlagen mit mehreren Injektoren, einem Steuergerät und einem Lese- und Schreibgerät sowie mit mehreren Lese- und Schreibgeräten.

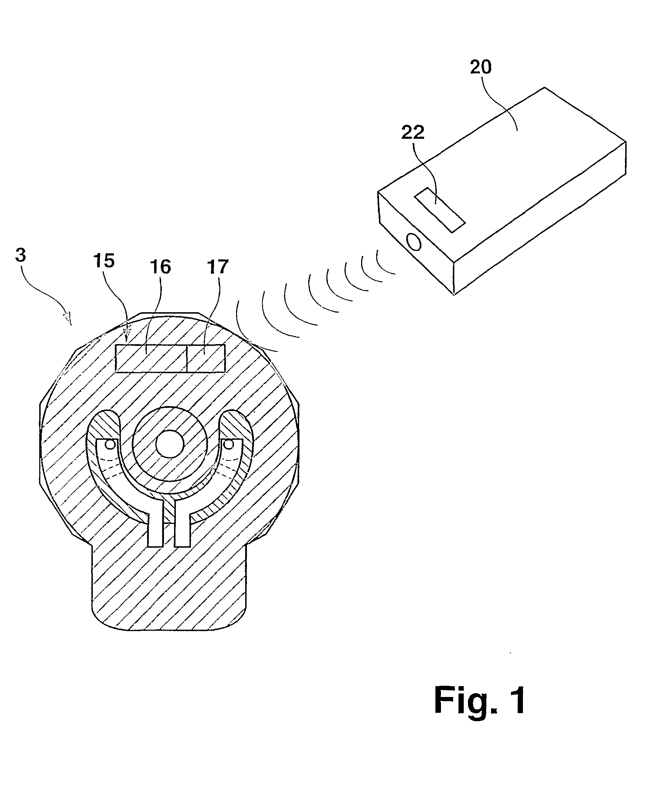

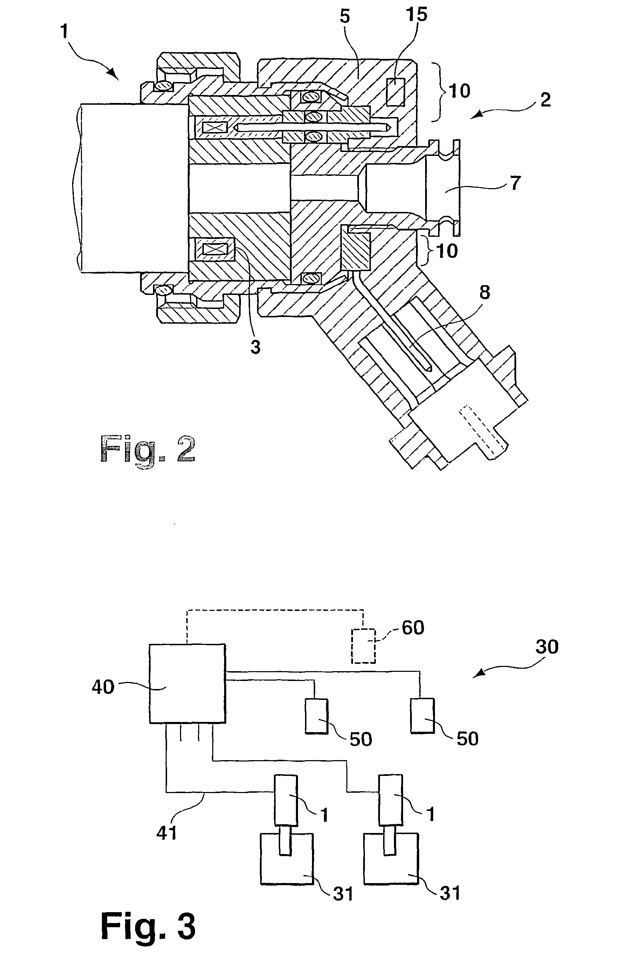

In den Figuren 1 und 2 weist ein Injektor 1 zum Einspritzen von unter hohem Druck (etwa 1600 bar) gelieferten Kraftstoff in einen Brennraum eines Dieselmotors einen Injektorkopf 2 auf, an dessen in Figur 2 linkem Bereich sich weitere Teile des Injektors 1 anschließen, insbesondere ein aus Metall gebildetes Gehäuse mit darin verschiebbar angeordnetem Ventilkolben, sowie einem Anker eines Magnetventils, der mit einer im Injektorkopf 2 angeordneten Magnetspule 3 zusammenwirkt. Bei den nicht gezeigten Einrichtungen handelt es sich um herkömmliche Ausgestaltungen und Einrichtungen von Injektoren. Der Injektorkopf weist eine Umspritzung 5 aus Kunststoff zum äußeren Schutz auf, die auch zur Befestigung einiger Teile dient. Am Injektorkopf 2 sind ein Anschluss 7 für eine Leckageleitung und elektrische Anschlüsse 8 zum Speisen der Magnetspule 3 vorgesehen. Der Treibstoff wird an einer nicht gezeigten Stelle dem Injektor zugeführt.

Ein den Anschluss 7 umgebendes, im wesentlichen flaches Beschriftungsfeld 10 trägt Angaben in Klarschrift. In dem Injektorkopf 2 ist ein Transponder 15 in der Kunststoffumspritzung 12 enthalten und hermetisch gegen äußere Einflüsse abgedichtet. Er befindet sich in einem Bereich unterhalb des Beschriftungsfelds 10. Der Transponder 15 weist einen Halbleiterchip auf, der einen Datenspeicher 16 bildet und außerdem eine Elektronik 17 zum Senden und Empfangen von Signalen enthält, sowie eine zur Vereinfachung nicht dargestellte, an sich bekannte Drahtspule (im Beispiel mit 2 Windungen) zum Senden und zum Empfangen, die mit der Elektronik 17 verbunden ist und zur Energieversorgung des Transponders sowie zum Empfangen und Senden von elektromagnetischen Signalen dient. Im Beispiel handelt es sich bei den Signalen um solche im Funkwellenbereich. Bei anderen erfindungsgemäßen Ausführungsformen ist der Transponder dagegen zum Senden und Empfangen von Signalen mit niedriger Frequenz, z. B. mit etwa 10 kHz, ausgebildet, und in diesem Falle handelt es sich um eine Datenübermittlung und Betriebsenergieübertragung mittels Transformatorkopplung.

Ein Lese- und Schreibgerät 20 (Fig. 1) enthält Sendeeinrichtungen und Empfangseinrichtungen sowie eine im wesentlichen durch eine Spule gebildete Antenne zum Aussenden und Empfangen von Signalen zum und von dem Transponder 15. Außerdem weist das Gerät 20 eine Sichtanzeige 22 auf sowie in seinem Inneren einen Datenspeicher und eine Schnittstelle, die das Ankoppeln des Gerätes 20 an einen Computer eines Reparaturbetriebs ermöglicht. Beim Lesen von Daten aus dem Transponder 15 sind interessierende Daten direkt an der Sichtanzeige 22 sichtbar, zusätzlich können sie aus dem Gerät, in dem sie gespeichert werden, in einen Computer übertragen werden. Etwaige von der Werkstatt ermittelte Fehlerursachen oder sonstige Kommentare können durch den Computer in das Lese- und Schreibgerät eingegeben und von diesem anschließend in dem Transponder 15 gespeichert werden. Bei der Auslieferung vom Hersteller enthält der Transponder 15 Daten der Herstellung und Messwerte, die bei Prüfungen des Injektors 1 beim Hersteller ermittelt und vorzugsweise durch mit Herstellungsanlagen oder Messanlagen gekoppelte Sender in den Transponder eingegeben wurden.

Fig. 3 zeigt eine vereinfachte schematische Darstellung einer Brennkraftmaschinenanlage 30. Vom Motor selbst sind lediglich zwei Zylinder oder Brennkammern 31 gezeigt, die jeweils von einem Injektor 1 im Betrieb mit Treibstoff versorgt werden. Ein Steuergerät 40 liefert über Steuerleitungen 41 elektrische Einspritzsignale an die Injektoren 1. Jeder der Injektoren 1 ist mit einem in Fig. 1 und 2 gezeigten Transponder 15 ausgestattet. Bei einer ersten in Fig. 3 gezeigten Ausführungsform ist jedem der Injektoren 1 je ein separates Lese- und Schreibgerät 50 zugeordnet, das in der Brennkraftmaschinenanlage jeweils ortsfest eingebaut ist. Die Anordnung ist so getroffen, , dass jedes dieser Geräte 50 Daten lediglich mit dem ihm zugeordneten Transponder austauschen kann. Im Beispiel ist hierfür die Reichweite der Geräte 50 und ihr Montageort geeignet gewählt Bei anderen Ausführungsformen der Erfindung erfolgt die eindeutige Zuordnung auf andere Weise, vorzugsweise durch unterschiedliche Codes und / oder Frequenzen. Jedes der Geräte 50 ist mit dem Steuergerät 40 verbunden. Bei einer anderen Ausführungsform ist für eine Mehrzahl von Transpondern, im Beispiel für alle Transponder 1, ein einziges Lese- und Schreibgerät 60 vorgesehen, das gestrichelt gezeigt ist. Die Geräte 50 sind bei dieser anderen Ausführungsform nicht vorhanden. Das Gerät 60 ist mit dem Steuergerät 40 verbunden. Das Gerät 60 ist so angeordnet und ausgebildet, dass es mit den ihm zugeordneten mehreren Transpondern Daten austauschen kann. Hierfür mag es nötig sein, die Reichweite der drahtlosen Datenverbindungen größer zu machen als bei den Geräten 50. Das Steuergerät 40 verwendet die durch die Geräte 50 bzw. das Gerät 60 aus den Transpondern gelesenen Daten zum Steuern des Betriebs des Motors. Bei besonderen Vorfällen oder auch bei regulärem Betrieb, wenn ein im Steuergerät 40 oder im Transponder gespeichertes Programm dies vorgibt, werden durch das Steuergerät 40 Daten in den Transpondern gespeichert.

## Patentansprüche

1. Kraftstoffeinspritzventil (1) für eine Brennkraftmaschine, mit einem Ventilkopf (2) mit mindestens einem Beschriftungsfeld (10) für Beschriftungen in Klarschrift und einer Einrichtung zum Speichern von Daten, die durch eine Leseeinrichtung lesbar sind, **dadurch gekennzeichnet, dass**
eine Einrichtung zum Speichern von Daten als Transponder (15), der durch elektromagnetische, nicht optische, Signale drahtlos ansprechbar ist, ausgebildet ist, der innerhalb einer Kunststoffumspritzung (5) des Ventilkopfes (2) angeordnet ist, wobei der Transponder (15) einen elektronisch lesbaren und beschreibbaren Speicher (16) aufweist.

2. Brennkraftmaschinenanlage (30), die mindestens ein Kraftstoffeinspritzventil (1) nach Anspruch 1 aufweist, mit einem Steuergerät (40) zum Steuern mindestens eines der folgenden Parameter: Drehzahl, Kraftstoffzufuhr, Einspritzzeitpunkt,
**dadurch gekennzeichnet, dass**
eine mit dem Steuergerät (40) gekoppelte Leseeinrichtung (50; 60) zum Lesen der in dem Transponder gespeicherten Daten vorgesehen ist, und dass das Steuergerät (40) zum Auswerten der gelesenen Daten für die Steuerung der Brennkraftmaschinenanlage ausgebildet ist.

3. Brennkraftmaschinenanlage nach Anspruch 2, **dadurch gekennzeichnet, dass** die Leseeinrichtung in der Brennkraftmaschinenanlage ortsfest angeordnet ist.

4. Brennkraftmaschinenanlage nach Anspruch 3, **dadurch gekennzeichnet, dass** für jedes Kraftstoffeinspritzventil eine diesem zugeordnete Leseeinrichtung vorgesehen ist.

5. Brennkraftmaschinenanlage nach Anspruch 3, **dadurch gekennzeichnet, dass** eine einzige Leseeinrichtung mehreren Kraftstoffeinspritzventiien zugeordnet ist, und dass die Leseeinrichtung derart ausgebildet ist, dass sie Daten von allen Transpondern lesen kann.

6. Brennkraftmaschinenanlage nach einem der Ansprüche 2 bis 5, **dadurch gekennzeichnet, dass** die Leseeinrichtung zusätzlich- zum Schreiben von Daten in den Transponder ausgebildet ist, und dass das Steuergerät derart ausgebildet ist, dass es beim Auftreten eines Kriteriums aus der folgenden Gruppe: erreichen eines vorgegebenen Zeitpunkts, Ablauf einer vorgegebenen Zeitspanne, erreichen einer vorgegebenen Anzahl von Betriebsstunden, erreichen einer vorgegebenen Anzahl von gefahrenen Kilometern, Auftreten von Abweichungen der Betriebseigenschaften der Brennkraftmaschinenanlage von Sollwerten Daten in mindestens einem Transponder speichert.

## Claims

1. Fuel injection valve (1) for an internal combustion engine, having a valve head (2) and at least one labelling panel (10) for labels in plain writing and a device for storing data which is readable by a reading device, **characterized in that**
a device for storing data is embodied as a transponder (15) which can be addressed in a wirefree fashion by means of electromagnetic, not optical, signals and is arranged within a plastic injection-moulded encapsulation (5) of the valve head (2), the transponder (15) having a memory (16) which is electronically readable and writeable.

2. Internal combustion engine system (30) which has at least one fuel injection valve (1) according to Claim 1, having a control unit (40) for controlling at least one of the following parameters: rotational speed, fuel supply, injection time, **characterized in that**
a reading device (50; 60), which is connected to the control unit (40), is provided for reading the data stored in the transponder, and **in that** the control unit (40) is designed to evaluate the data which is read for controlling the internal combustion engine system.

3. Internal combustion engine system according to Claim 2, **characterized in that** the reading device is arranged in a positionally fixed manner in the internal combustion engine system.

4. Internal combustion engine system according to Claim 3, **characterized in that**, for each fuel injection valve, a reading device is provided which is assigned to said fuel injection valve.

5. Internal combustion engine system according to Claim 3, **characterized in that** a single reading device is assigned to a plurality of fuel injection valves, and **in that** the reading device is embodied in such a way that it can read data from all the transponders.

6. Internal combustion engine system according to one of Claims 2 to 5, **characterized in that** the reading device is additionally designed to write data to the transponder, and **in that** the control unit is embodied in such a way that it stores data in at least one transponder when a criterion from the following group is met: a predefined time being reached, a predefined period of time expiring, a predefined number of operating hours being reached, a predefined number of kilometres driven being reached, deviations from nominal values occurring in operating properties of the internal combustion engine.

## Revendications

1. Injecteur de carburant (1) pour un moteur à combustion interne, comprenant une tête de soupape (2) pourvue d'au moins un champ d'inscription (10) pour des inscriptions en clair et un dispositif de stockage de données lisible par un dispositif de lecture,
**caractérisé en ce qu'**
un dispositif de stockage de données sous forme de transpondeur (15), pouvant être appelé par une liaison sans fil par des signaux électromagnétiques non optiques, est disposé à l'intérieur d'un moulage en matière plastique (5) de la tête de soupape (2), le transpondeur (15) présentant une mémoire (16) lisible et inscriptible de manière électronique.

2. Système de moteur à combustion interne (30), présentant au moins un injecteur de carburant (1) selon la revendication 1, comprenant un appareil de commande (40) pour commander au moins l'un des paramètres suivants : régime, arrivée de carburant, instant d'injection,
**caractérisé en ce qu'**
on prévoit un dispositif de lecture (50 ; 60) couplé à l'appareil de commande (40) pour lire les données stockées dans le transpondeur, et l'appareil de commande (40) est configuré pour exploiter les données lues pour la commande du système de moteur à combustion interne.

3. Système de moteur à combustion interne selon la revendication 2,
**caractérisé en ce que**
le dispositif de lecture est fixé dans le système de moteur à combustion interne.

4. Système de moteur à combustion interne selon la revendication 3,
**caractérisé en ce qu'**
un dispositif de lecture est associé à chaque injecteur de carburant.

5. Système de moteur à combustion interne selon la revendication 3,
**caractérisé en ce qu'**
un unique dispositif de lecture associé à plusieurs injecteurs de carburant, est configuré pour lire des données provenant de tous les transpondeurs.

6. Système de moteur à combustion interne selon l'une des revendications 2 à 5,
**caractérisé en ce que**
le dispositif de lecture est en outre configuré pour inscrire des données dans le transpondeur, et l'appareil de commande est configuré pour enregistrer des données dans au moins un transpondeur, lors de l'apparition d'un critère provenant du groupe suivant : atteinte d'un instant prédéterminé, écoulement d'une période de temps prédéterminée, atteinte d'un nombre prédéterminé d'heures de service, atteinte d'un nombre prédéterminé de kilomètres parcourus, apparition d'écarts entre les caractéristiques de fonctionnement du système de moteur à combustion interne et des valeurs de consigne.
